# EUROPÄISCHE PATENTANMELDUNG

(11) **EP 1 024 267 A2**
(43) Veröffentlichungstag der Anmeldung: **02.08.2000**
(21) Anmeldenummer: 00101732.6
(22) Anmeldetag: 28.01.2000
(51) Int. Cl.: F02D 11/10

(54) **Drosselklappendrehwinkelsensor**

(30) Priorität: 29.01.1999 DE 19903490; 29.01.1999 DE 19903653; 29.01.1999 DE 29901516 U; 27.05.1999 DE 29909201 U; 17.05.1999 DE 29908409 U
(71) Anmelder: AB Elektronik GmbH, 59368 Werne (DE)
(72) Erfinder: Apel, Peter, 59394 Südkirchen (DE); Wilczek, Klaus, 59368 Werne (DE)
(74) Vertreter: Hoffmeister, Helmut, Dr. Dipl.-Phys.

(57) **Zusammenfassung**

Um eine Stellvorrichtung und eine Hall-Effekt-Drehwinkelsensoreinrichtung noch einfacher herstellen und montieren zu können, wird eine stationäre Einheit wenigstens teilweise in einer Gehäuseeinheit (6, 7) gehalten. Die stationäre Einheit besteht aus wenigstens zwei beabstandet zueinander angeordneten Statorringsegmenten (2, 3), die zwischen sich einen Luftspalt (15) und wenigstens eine Statorabstandsausnehmung (16) freilassen. In den Luftspalt (15) oder die Statorabstandsausnehmung (16) ist wenigstens teilweise wenigstens ein Hall-IC-Schaltkreis (4) angeordnet. Eine bewegliche Einheit besteht aus einem teilringförmig ausgebildeten Ringmagnetteilsegment (5), das in einem Zahnradsegment (11) eines Getriebes (1) angeordnet und in den Luftspalt (15) wenigstens teilweise zu bewegen ist.

## Beschreibung

Die Erfindung betrifft eine Stellvorrichtung für eine Drosselklappeneinheit, bei der in einer Gehäuseeinheit eine von einer Drosselklappenwelle gehaltene Drosselklappe verstellbar angeordnet ist, die wenigstens aufweist
- eine Halleffekt-Drehwinkelsensoreinheit, die an der Drosselklappenwelle angeordnet ist, bestehend aus
   - einer stationären Einheit und
   - einer beweglichen Einheit, die gegenüber der stationären Einheit zu bewegen ist,
- eine Antriebseinheit und
- ein Getriebe, das zwischen der beweglichen Einheit und der Antriebseinheit angeordnet ist,
wobei die Gehäuseeinheit wenigstens die stationäre und die bewegliche Einheit wenigstens teilweise umgibt.

Die Erfindung betrifft darüber hinaus eine Halleffekt-Drehwinkelsensoreinrichtung, bestehend aus
- einer stationären Einheit und
- einer beweglichen Einheit, die gegenüber der stationären Einheit zu bewegen ist,
wobei die stationäre und die bewegliche Einheit wenigstens teilweise von einer Gehäuseeinheit umgeben ist.

Eine Verstelleinrichtung der eingangs genannten Art ist aus der WO-A-9 514 911 bekannt. Sie besteht aus einer Drosselklappe, die von einem Drosselklappengehäuse umgeben ist. Die Drosselklappe ist mit einer Drosselklappenwelle drehbar im Drosselklappengehäuse gehalten. Ein Drehwinkelsensor, eine Getriebeeinheit und eine Motoreinheit, die miteinander verbunden sind, befinden sich in einem weiteren Sensorgehäuse. Ein speziell ausgebildetes Elektronikgehäuse umfaßt extra eine Schaltungseinheit. Die einzelnen Gehäuse sind zusammensteckbar. Der Drehwinkelsensor besteht aus einer stationären Formation, gegenüber der eine rotierende Formation bewegbar ist. Die stationäre Formation ist ein Statorelement, das aus zwei halbmundförmigen Statorteilelementen besteht, zwischen denen sich eine Abstandsausnehmung befindet, in der ein Hallsensor angeordnet ist. Die rotierende Formation ist ein Ringmagnetelement, das von einer Magnethalteeinheit gehalten ist, die mit einer Welle verbunden ist.

Diese Verstelleinrichtung hat sich bewährt. Allerdings ist der Montageaufwand immer noch zu hoch. Darüber hinaus ist eine Montage des Drehwinkelsensors, des Motors und des Getriebes nicht einfach an jeder Drosselklappeneinheit möglich.

Aus der WO-A-9 855 828 ist ein Drehwinkelsensor bekannt. Er besteht aus zwei Statorelementen, zwischen denen sich ein Luftspalt befindet, und zwei Magnetelementen, die teilringsegmentförmig ausgebildet sind. Die beiden Magnetelemente sind an einem ferromagnetischen Teil angeordnet und bewegen sich relativ zu den Statorelementen. Im Luftspalt befindet sich ein Hallelement.

Zwar wird hierdurch der Materialaufwand für diese Teile verringert, der Herstellungs- und Montageaufwand ist immer noch zu hoch.

Aus der DE-A-19 634 281 ist eine Meßvorrichtung zur berührungslosen Erfassung eines Drehwinkels bekannt. In einem topfförmigen Gehäuse aus magnetisch leitendem Material sind zwei Segmente unter Belassung eines Luftspalts angeordnet. Im Luftspalt befinden sich zwei Hallsensoren. Um beide Segmente ist ein halbkreisförmiger Permanentmagnet bewegbar.

Nur um den linearen Meßbereich auf 110° zu vergrößern, ist ein Segment magnetisch leitend und das andere nicht magnetisch leitend mit dem topfförmigen Gehäuse verbunden, so daß eine Aufspaltung des magnetischen Flusses des Magneten erfolgt, wobei wenigstens ein Teil des Magnetflusses die Hallsensoren durchströmt.

Aus der DE-A-19 630 764 ist eine zweite Meßvorrichtung zur berührungslosen Erfassung einer Relativbewegung bekannt. Hier bewegt sich ein teilkreisförmiger Ringmagnet mit einem Öffnungswinkel von 240° gegenüber einem Stator mit drei Statorteilelementen, die zwischen sich drei Luftspalte freilassen. In einem der Luftspalte befindet sich ein Hallsensor.

Allerdings wird durch diesen Aufbau ebenfalls nur eine Erweiterung des linearen Meßbereichs der Meßkurve von 90° bis 110° angestrebt.

Um die Anzahl der mechanischen Bauteile und die Abmessungen eines Gebers zu reduzieren, ist aus der EP-A-0 665 416 bekannt, dessen Stator koaxial im Inneren eines Permanentmagneten anzuordnen.

Letztendlich ist aus der DE-A-19 857 017 ein Drehwegaufnehmer bekannt, der einen Stator und einen Rotor aufweist, der mit Verbindungsmitteln mit einer Antriebswelle und einer beweglichen Meßscheibe verbunden ist. Stator und Rotor sind von einem Gehäuse umgeben.

Gelenklager zwischen Stator und Rotor sollen hier lediglich helfen, die beim Zusammenbau entstehenden mechanischen Toleranzen zu beherrschen.

Es stellt sich demnach die Aufgabe, eine Stellvorrichtung und eine Drehwinkelsensoreinrichtung der eingangs genannten Art so weiter zu entwickeln, daß sie noch einfach herzustellen und zu montieren sind

Erfindungsgemäß wird diese Aufgabe bei einer Verstellvorrichtung durch die Merkmale des Anspruchs 1 oder 2 und bei einer Drehwinkelsensoreinrichtung durch die Merkmale des Anspruchs 3 oder 4 gelöst.

Die mit der Erfindung erzielten Vorteile bestehen insbesondere darin, daß die Statorelemente als Statorringsegmente bzw. als Statorringteilsegmente und das Ringmagnetelement als Ringmagnetteilsegment ausgebildet sind. Hierdurch wird Material eingespart. Das Integrieren dieser Teile in die Einheiten des Drehwinkelsensors macht spätere Einjustierungen überflüssig, so daß wertvolle Montagezeit gespart wird. Die besondere Ausgestaltung des Ringmagnetteilsegments und die Teilung des Stators in Teilstatorringteilsegmente und ihre besondere Zuordnung zueinander stellt ein vollkommen anderes Aufbauprinzip des Drehwinkelsensors dar. Mit diesem Aufbau sind genaueste Messungen möglich.

Bei einer Drehwinkelsensoreinrichtung kann das bewegliche Element ein Zahnradsegment eines Getriebes sein. Dieses Zahnradsegment kann auf einer Drosselklappenwelle einer Drosselklappe angeordnet sein. Das drehbewegliche Element kann aber auch anders ausgebildet und Teil einer anderen Einrichtung, z. B. eines Gurtstraffers oder dergleichen sein. Durch die unterschiedliche Ausgestaltung des drehbeweglichen Elements ist eine Kopplung an unterschiedlichste Systeme gegeben, bei denen eine Winkel-Aufnahme vorgenommen werden soll.

Die beiden Statorringsegmente und der teilringförmig ausgebildete Ringmagnet können in einer Ebene liegend wenigstens teilweise nebeneinander angeordnet sein. Der teilringförmig ausgebildete Ringmagnet bewegt sich dabei wie eine Sichel in den zwischen beiden Statorteilringsegmenten aufgemachten Luftspalt, der zugleich Statorabstandsausnehmung ist, in dem wenigstens ein Hall-IC-Schaltkreis angeordnet sein kann.

Die beiden Statorringsegmente und der teilringförmig ausgebildete Ringmagnet können auch übereinander liegend angeordnet sein. Bei dieser Konfiguration bewegt sich der teilringförmig ausgebildete Ringmagnet in dem zwischen den beiden Statorringsegmenten aufgemachten Luftspalt. Eines der beiden Statorringsegmente ist in zwei Teilstatorringteilsegmente aufgeteilt, die zwischen sich die Abstandsausnehmung freilassen, in der wenigstens ein Hall-IC-Schaltkreis angeordnet sein kann. In der Statorabstandsausnehmung kann ein oder können zwei oder mehrere Hall-IC-Schaltkreise angeordnet sein. Das Vorsehen mehrerer Hall-IC-Schaltkreise erhöht zum einen durch eine vorhandene Redundanz die Funktionssicherheit, zum anderen können um einen bestimmten Winkel versetzt verlaufende Spannungskurven der Hall-IC-Schaltkreise aufgenommen und dargestellt werden.

Das erste und das zweite Statorringteilsegment sowie das Ringmagnetteilsegment und das dritte Statorringteilsegment können in einer Ebene liegend wenigstens teilweise nebeneinander angeordnet sein. Bei einem anderen Aufbau können sie wenigstens teilweise übereinander liegend angeordnet sein.

Bei einer Drehung des Zahnradsegments von einer Null- bis zu einer Endstellung kann das Ringmagnetteilsegment und das dritte Statorringteilsegment gegenüber dem ersten und dem zweiten Statorringteilsegment in einer Nullstellung sich wenigstens teilweise und in einer Endstellung sich wenigstens vollständig gegenüberstehen. Bei in einer Ebene liegenden Teilsegmenten bewegen sich das Ringmagnetteilsegment und das dritte Statorringteilsegment wie eine Sichel an dem ebenfalls wie eine Sichel wirkenden Ringmagnetteilsegment und dem dritten Statorringteilsegment, beginnend von ihren Spitzen, entweder nebeneinander oder untereinander bis zum Ende der beiden Sicheln aneinander vorbei sich bewegend. Der Hall-IC-Schaltkreis ist dabei an der günstigsten Bewegungsstelle dieser beiden sichelförmigen Teilelemente positioniert.

Die zwei Statorringsegmente , das erste und das zweite Statorringteilsegment sowie das Ringmagnetteilsegment und das dritte Statorringteilsegment sind wie Sicheln ausgebildet, die so lang sind wie ein Teilkreis zwischen 80 und 180°. Als meßtechnisch günstigste Variante hat sich die Länge eines Teilkreises von 115° herausgestellt.

Das Ringmagnetteilsegment kann als ein gegenläufig eingestellter Magnet ausgebildet sein. Hierdurch wird die Gesamthöhe der Drehwinkelsensoreinrichtung um etwa die Hälfte reduziert.

Die Drehwinkelsensoreinrichtung mit ihren Teilen und das Getriebe können wenigstens teilweise von einem Sensorgehäuseelement der Gehäuseeinheit umschlossen sein.

Das Zahnradsegment kann im Sensorgehäuseelement mit einem in diesem ebenfalls angeordneten Federelement verbunden sein. Hierdurch wird die Einnahme einer definierten Endstellung gewährleistet.

Um die einzelnen Teile besser justieren zu können, wird Kunststoff eingesetzt. Bei einem Sensorgehäuseelement, das aus Kunststoff geformt wird, können in diesem Formvorgang das erste und das zweite Statorringteilsegment mit eingeformt werden.

Ein erstes Zahnradsegment kann aus Kunststoff bestehen, in das ein erstes Ringmagnetteilsegment wenigstens teilweise eingeformt werden kann.

Bei dem Formen eines zweiten Zahnradsegments aus Kunststoff kann ein zweites Ringmagnetteilsegment und das dritte Statorringteilsegment auch hier mit in den Kunststoff mit eingeformt werden. Das Einformen in den Kunststoff erspart zusäztliche Justierarbeiten und erleichtert die Hauptmontage der Grundelemente der Drehwinkelsensoreinrichtung.

Die Drosselklappe kann mit der Drosselklappenwelle in einem Drosselklappengehäuse der Gehäuseeinheit angeordnet sein.

Das Sensorgehäuseelement kann auf das Drosselklappengehäuse aufgesetzt und das Zahnradsegment auf die Drosselklappenwelle aufgesteckt werden. Diese zweiteilige Ausführung ermöglicht es, den Drehwinkelsensor mit Getriebe und dergleichen an einer anderen Stelle anzufertigen wie die Drosselklappeneinheit. Die vorgefertigten Einheiten können dann beim Drosselklappenhersteller oder an einer dritten anderen Stelle montiert werden. Hierdurch ist es möglich, große Stückzahlen zu fertigen und den Endpreis der jeweiligen Einheiten zu optimieren.

Das Sensorgehäuseelement kann dabei als Deckelgehäuseelement ausgebildet sein. Dieses Deckelgehäuseelement kann als Verschluß auf das Drosselklappengehäuse aufgesetzt werden.

Auch das Gehäusedeckelelement kann ebenfalls aus Kunststoff bestehen, in das die Statorringteilsegmente bzw. die Teilstatorringteilsegmente wenigstens teilweise eingeformt sein können. Es kann mit einem ersten Drosselklappengehäuse verbunden werden. Das Einformen dieser für die Funktion und die Meßgenauigkeit des Drehwinkelsensors sehr bedeutsamen Teile ist so auf einfache Art und Weise gesichert. Der Fertigungsaufwand wird damit auf ein Minimum herabgesetzt. Eine genauste Justage dieser Elemente ist gegeben, so daß ein Nachjustieren nicht mehr erforderlich ist.

Das Sensorgehäuseelement kann aber auch selbst einen Deckel aufweisen, mit dem es zu verschließen ist. In diesen Deckel können das erste und das zweite Statorringteilsegment bei einer Übereinanderanordnungsvariante wenigstens teilweise eingeformt sein.

Die Verbindung zwischen dem Gehäusedeckelelement und dem Drosselklappengehäuse kann auf zweierlei Art und Weise vorgenommen werden.

Zum einen kann das Gehäusedeckelelement auf das Drosselklappengehäuse aufgesetzt und damit ein Gesamtgehäuse hergestellt werden. Bei diesem Aufsetzen wird zugleich das Zahnradsegment auf die Drosselklappenwelle aufgesteckt. Das zugelieferte und vollständige bestückte Gehäusedeckelelement braucht so mit nur einem Handgriff auf die Drosselklappeneinheit aufgesetzt zu werden und es entsteht eine funktionsfähige Gesamteinheit.

In der zweiten Ausführungsform umschließt das Gehäusedeckelelement sämtliche Funktionseinheiten, d. h. das Getriebe, die die Statorringteilelemente, die Teilstatorringteilsegmente sofern sie eingesetzt werden, einen oder mehrere Hall-IC-Schaltkreise und den teilringförmig ausgebildeten Ringmagneten. Dieses Gehäusedeckelelement ist mit einem ersten Drosselklappengehäuse durch einen Steg oder dergleichen verbunden, so daß beide eine Einheit darstellen.

Das Sensorgehäuseelement und ein zweites Drosselklappengehäuse können aber auch miteinander verbunden sein. Diese Verbindung kann durch Schrauben oder durch einen zusätzlichen Steg oder dergleichen realisert werden.

Das erste und das zweite und das dritte Statorringteilsegment können aus einem ferrittischem Material bestehen. Zum Einsatz können ausgewählte Stähle kommen. Hierbei kann das Ringmagnetteilsegment und das dritte Statorringteilsegment einteilig geformt werden. Anschließend kann dann das Ringmagnetteilsegment durch ein spezielles Aufmagnetisierungsverfahren als gegenläufiger Magnet ausgebildet werden.

Das Getriebe kann als herkömmliches oder als Magnetengetriebe realisiert werden. Zum Getriebe gehören
- das erste oder zweite Zahnradsegment,
- ein Motorritzel, das mit der Antriebseinheit verbunden ist,
- ein Zwischenritzel und
- ein Stellritzel, das am Zwischenritzel angeordnet sein kann und im Sensorgehäuseelement drehbar gelagert sein kann, wobei mit dem ersten oder zweiten Zahnradsegment an das Stellritzel und mit dem Motorritzel an das Zwischenritzel anzugreifen ist.

Die Antriebseinheit kann ein Motor sein, der vom Deckelgehäuseelement oder Sensorgehäuseelement wenigstens teilweise umgeben ist. Es ist aber auch möglich, daß der Motor, der von einem externen Gehäuse umschlossen sein kann, mit dem Deckelgehäuseelement verbunden wird. In beiden Fällen entsteht eine Bauart, die auf einfache Art und Weise mit einer separat zu fertigenden Drosselklappeneinheit verbunden werden kann.

Die Erfindung ist in der Zeichnung dargestellt und wird im folgenden näher erläutert. Es zeigen
- Fig. 1: eine erste Ausführungsform eines Drosselklappendrehwinkelsensors mit geöffneten Deckelgehäuseelement in einer schematischen, perspektivischen Darstellung,
- Fig. 2: eine zweite Ausführungsform eines Drosselklappendrehwinkelsensors mit geöffneten Deckelgehäuseelement in einer schematischen, perspektivischen Darstellung,
- Fig. 3: einen Drosselklappendrehwinkelsensor gemäß Fig. 1 in einer schematisch dargestellten Seitenansicht,
- Fig. 4: einen Drosselklappendrehwinkelsensor gemäß Fig. 1 in einer schematisch dargestellten Draufsicht,
- Fig. 5: einen Drosselklappendrehwinkelsensor gemäß Fig. 1 in einer schematisch dargestellten Rückansicht,
- Fig. 6: einen vergrößerten Detailausschnitt eines Drosselklappendrehwinkelsensors gemäß den Fig. 1 und 3 bis 5 in einer schematisch dargestellten Draufsicht,
- Fig. 7a: eine dritte Ausführungsform eines Drosselklappendrehwinkelsensors mit geöffneten Sensorgehäuseelement in einer schematischen, perspektivischen Darstellung,
- Fig. 7b: einen Teilausschnitt aus einer Drosselklappendrehwinkelsensorvorrichtung gemäß Fig. 7a,
- Fig. 8a: eine vierte Ausführungsform eines Drosselklappendrehwinkelsensors mit geöffnetem Sensorgehäuseelement in einer schematischen, perspektivischen Darstellung und
- Fig. 8b: einen Teilausschnitt eines Drosselklappendrehwinkelsensorvorrichtung gemäß Fig. 8a.

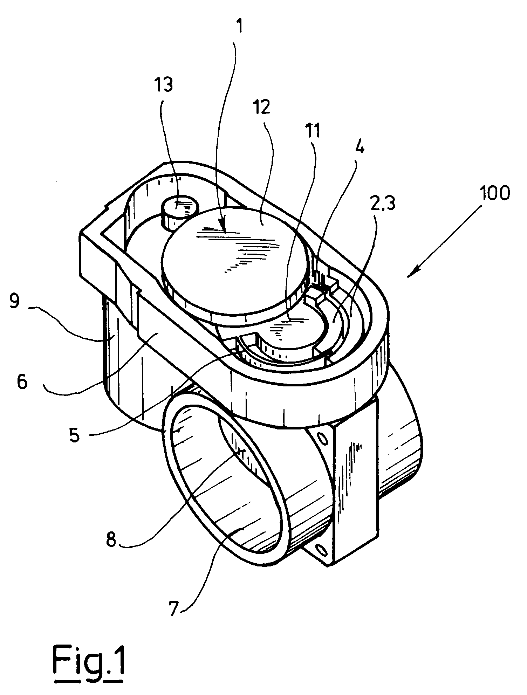

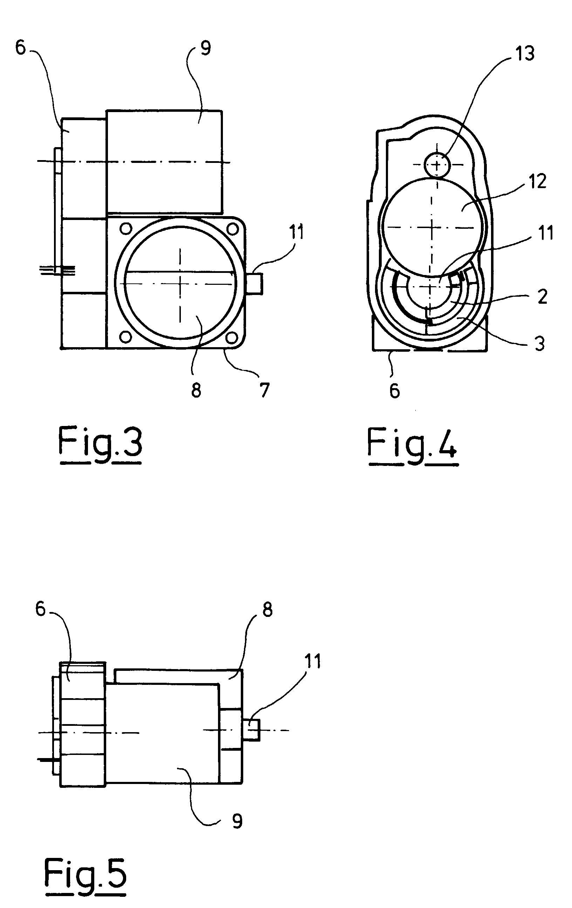

In den Fig. 1 bis 6 sind gleiche Bauteile mit gleichen Bezugszeichen versehen.

In Fig. 1 ist ein Drosselklappendrehwinkelsensor 100 dargestellt.

Er zeigt
- eine Drosselklappeneinheit, bestehend aus einem Drosselklappengehäuse 7 und
- eine in dem Drosselklappengehäuse 7 über eine Drosselklappenwelle 10 verstellbar angeordnete Drosselklappe 8.

Wie die Fig. 1 bis 5 zeigen, ist auf dem Drosselklappengehäuse 7 ein Deckelgehäuseelement 6 angeordnet, das einen Motor 9 trägt. Das Deckelgehäuseelement 6 kann als geschlossene Formation hergestellt werden. Es kann auch als offene Konfiguration gefertigt werden, die dann anschließend mit einem separaten Deckel verschlossen wird.

Im Deckelgehäuseelement 6 sind angeordnet
- ein Getriebe 1,
- eine stationäre Einheit 2, 3, 4 und
- eine rotierende Einheit 5 einer Hall-Effekt-Drehwinkelsensoreinrichtung.

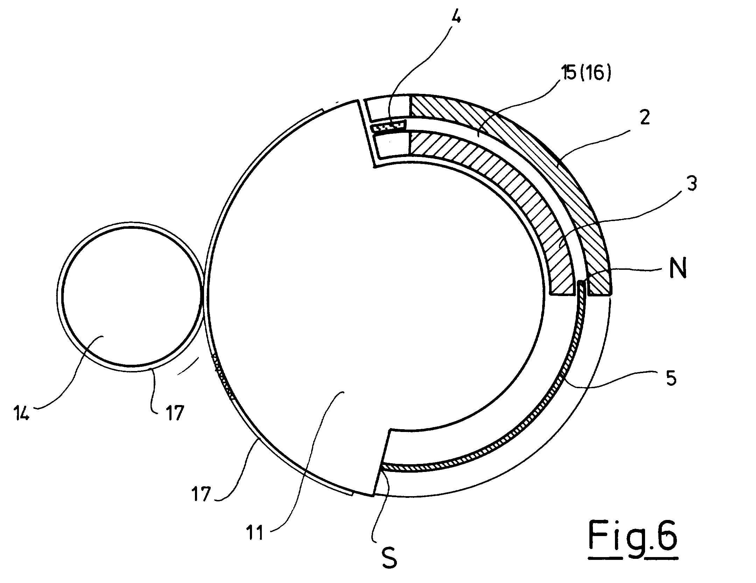

Das Getriebe 1 kann als herkömmliches Getriebe oder als Planetengetriebe ausgebildet sein. Es besteht aus einem Motorritzel 13, das mit der Welle des Motors 9 verbunden ist. Das Motorritzel 13 arbeitet mit einem Zwischenritzel 12 zusammen, an dessen Unterseite (vgl. auch Fig. 6) ein Stellritzel 14 angeordnet ist. Das Stellritzel 14 wiederum arbeitet mit einem Zahnradsegment 11 zusammen, das mit der Drosselklappenwelle verbunden oder verbindbar ist.

Erfindungswesentlich ist die Ausgestaltung der stationären und der beweglichen Einheit der Drehwinkelsensoreinrichtung.

Wie Fig. 6 zeigt, wird die stationäre Einheit gebildet durch zwei sich gegenüberliegende Statorringsegmente 2, 3. Die Statorringsegmente 2, 3 sind in dem Gehäuseelement 6 gehalten.

Zwischen den beiden Statorringsegmenten befindet sich ein Luftspalt 15, der zugleich auch Statorabstandsausnehmung 16 ist, an dessen Ende ein Hall-IC-Schaltkreis (ASIC) 4 angeordnet ist.

Das Zahnradsegment 11 arbeitet auf etwa einem Drittel seines Umfangs mit dem Stellritzel 14 zusammen, wobei beide Zahnräder eine Verzahnung 17 aufweisen. Das Zahnradsegment 11 ist mit einer Feder verbunden, die im Deckelgehäuseelement 6 gehalten wird. Hierdurch wird gewährleistet, daß das Zahnradsegment 11 immer in eine definierte Endstellung gedreht wird. Mit dem Drehen des Zahnradsegments 11 in die vorgesehene Endstellung wird gesichert, daß die rotierende Einheit der Drehwinkelsensoreinrichtung ebenfalls eine definierte Endstellung einnimmt.

Dem verzahnten Segment des Zahnradsegments 11 liegt ein halbkreisförmiges weiteres Segment gegenüber, das beabstandet gegenüber dem Statorringsegment 3 ist. An dieses Segment ist einseitig ein teilringförmig ausgebildete Ringmagnetteilsegment 5 als rotierende Einheit angeformt. Dadurch, daß das Zahnradsegment 11 aus Kunststoff besteht, ist der teilkreisförmig ausgebildete Ringmagnetteilsegment 5 lagegerecht und genau einzuformen. Beim Verdrehen des Zahnradsegments 11 fährt das Ringmagnetteilsegment 5 wie eine Sichel in den mit 15 und 16 bezeichneten Spalt hinein und erzeugt so einen veränderlichen Hall-Spannungswert.

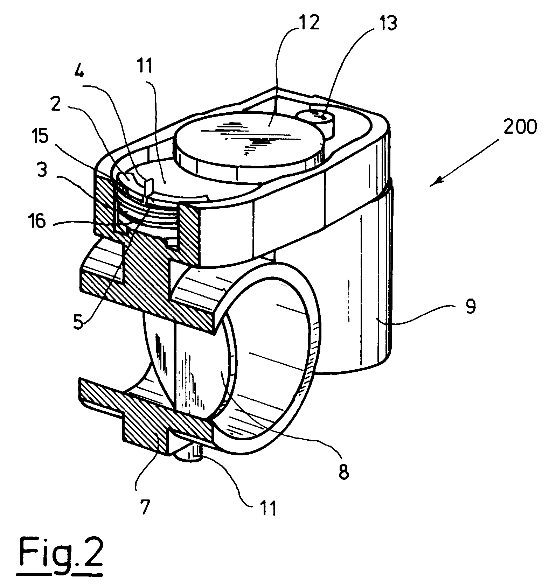

Bei einem in Fig. 2 dargestellten Drosselklappendrehwinkelsensor 200 ist das Getriebe 1 und auch das Zahnradsegment 11 des Getriebes so ausgeführt, wie in Fig. 1. Allerdings befinden sich hier die Statorringsegmente 2, 3 und das teilringförmig ausgebildete Ringmagnetteilsegment 5 nicht in einer Ebene, sondern sind übereinander angeordnet.

Und zwar wird das Statorringsegment 2 in zwei Teilstatorringsegmente 2.1 und 2.2 aufgeteilt. Zwischen den beiden Teilstatorringsegmenten 2.1 und 2.2 wird die Statorabstandsausnehmung 16 aufgemacht, in der der Hall-IC-Schaltkreis (ASIC) 4 eingesetzt wird. Es ist auch möglich, zwei Ausnehmungen 16 durch eine weitere Unterteilung des Statorringsegments 2 vorzunehmen und so zwei um einen bestimmten Winkel versetzt verlaufende Ausgangsspannungsverläufe des Hall-IC-Schaltkreises aufnehmen zu können.

Zwischen den beiden Teilstatorringsegmenten 2.1 und 2.2 und dem darunter befindlichen Statorringteilsegment 3 wird der Luftspalt 15 aufgemacht. In diesem Luftspalt bewegt sich das Ringmagnetteilsegment 5, der von dem Zahnradsegment 7 gehalten wird. Das Einspritzen des teilkreisförmig ausgebildeten Ringmagnetteilsegments 5 in das aus Kunststoff hergestellte Zahnradsegment 11 und der Teilstatorringsegmente 2.1, 2.2 und des Statorringsegments 3 in das ebenfalls aus Kunststoff geformte Deckelgehäuseelement 6 sichert auch hier eine genaue Justierung der meßentscheidenden Teile der Drehwinkelsensoreinrichtung.

Das Deckelgehäuseelement 6 kann wie ein Gehäusedeckel ausgebildet sein, der die beschriebenen Teile des Sensors 100 oder 200 in sich aufnimmt. Das Deckelgehäuseelement 6 kann darüber hinaus den Motor 9 mit umfassen. Es ist aber auch möglich, den Motor 9 mit einem Extragehäuse zu versehen, das dann an das Drosselklappengehäuse 7 angeflanscht wird. Ein Drosselklappendrehwinkelsensor 100 oder 200 mit einem derartigen Drosselklappengehäuse 7 kann an anderer Stelle wie die Drosselklappeneinheit gefertigt werden und anschließend nur auf diesen aufgesetzt werden. Beim Aufsetzen des Deckelgehäuseelements 6 auf das Drosselklappengehäuse 7 rastet zugleich die Drosselklappenwelle in das Zahnradsegment 11 oder in eine Kopplungseinheit ein, so daß der Sensor mit einem Handgriff mit der Drosselklappe verbunden ist.

Es ist aber auch möglich, daß das Deckelgehäuseelement 6 als flache Dose hergestellt wird, wie sie in den Fig. 1 und 2 zu sehen ist, die mit einem separaten Deckel verschließbar ist und die ebenfalls die beschriebenen Elemente des Drosselklappendrehwinkelsensors 100 oder 200 in sich aufnimmt. Auch in diesem Fall ist ein Verbinden mit dem Drosselklappengehäuse durch ein Aufstecken bei gleichzeitigem Ankoppeln an die Drosselklappenwelle der Drosselklappe möglich. Es ist aber auch möglich, daß Drosselklappengehäuse und Deckelgehäuseelement als eine Einheit vorgefertigt werden und dann entsprechend bestückt werden.

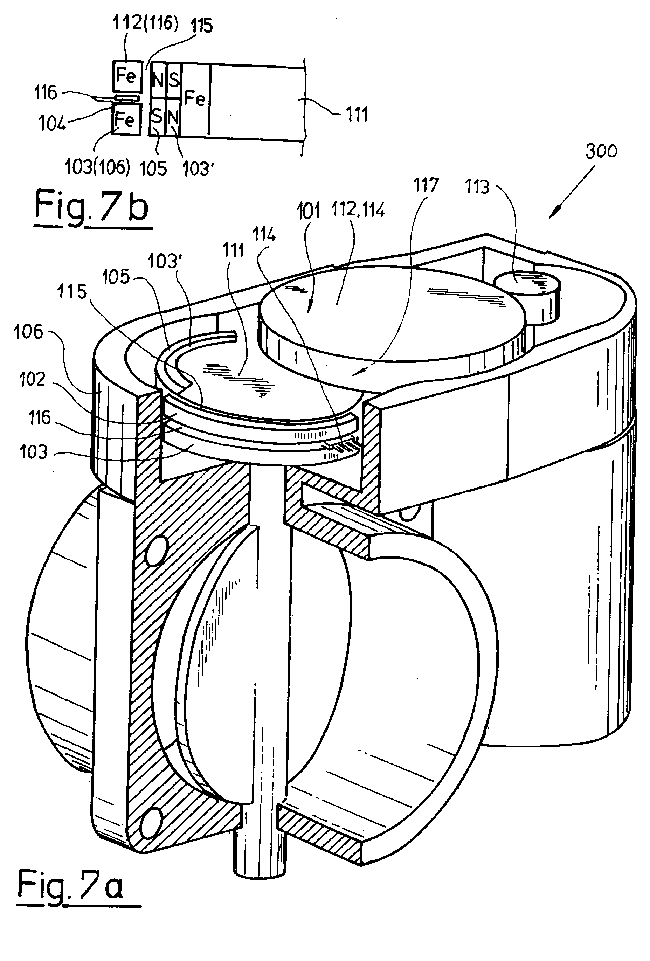

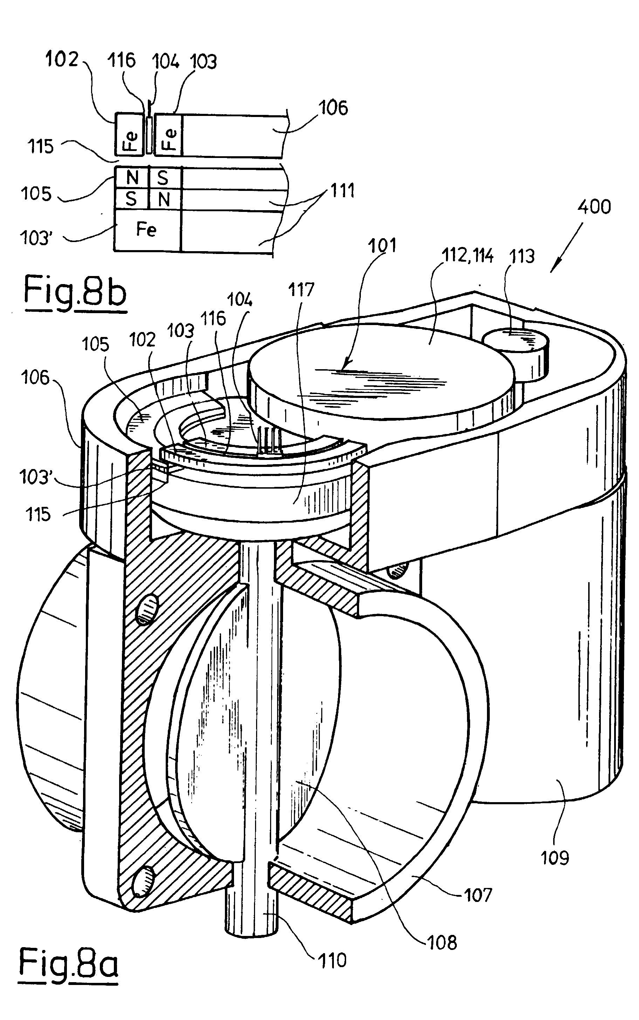

In den Fig. 7a, 7b, 8a und 8b sind weitere Drosselklappenwinkelsensoren gezeigt, bei denen ebenfalls gleiche Bauteile mit gleichen Bezugszeichen versehen werden.

In Fig. 7a ist ein Drosselklappendrehwinkelsensor 300 dargestellt.

Er besteht aus einer Drehwinkelsensoreinrichtung und
- einer Drosselklappeneinheit, bestehend aus einem Drosselklappengehäuse 107 und
- einer in dem Drosselklappengehäuse 107 über eine Drosselklappenwelle 110 verstellbar angeordnete Drosselklappe 8.

Auf dem Drosselklappengehäuse 107 ist ein Sensorgehäuseelement 106 der Drehwinkelsensoreinrichtung angeordnet, das einen Motor 109 trägt. Das Sensorgehäuseelement 106 kann als geschlossene Formation hergestellt werden. Es kann auch als offene Konfiguration gefertigt werden, wie sie in Fig. 7a gezeigt ist, die dann anschließend mit einem separaten Deckel verschlossen wird.

Im Sensorgehäuseelement 106 sind angeordnet
- ein Getriebe 101 und
- eine stationäre Einheit 102, 103, 104 und
- eine rotierende Einheit 103', 105 der Drehwinkelsensoreinrichtung..

Das Getriebe 101 kann als herkömmliches Getriebe oder als ein Planetengetriebe ausgebildet sein. Es besteht aus einem Motorritzel 113, das mit der Welle des Motors 109 verbunden ist. Das Motorritzel 113 arbeitet mit einem Zwischenritzel 112 zusammen, an dessen Unterseite (nicht dargestellt) ein Stellritzel 114 angeordnet ist. Das Stellritzel 114 wiederum arbeitet mit einem Zahnradsegment 111 zusammen, das mit der Drosselklappenwelle verbunden oder verbindbar ist.

Das Zahnradsegment ist als kreisrunde Scheibe ausgebildet, die segmentförmig mit einer Verzahnung 117 versehen ist.

Erfindungswesentlich ist die Ausgestaltung der stationären und der beweglichen Einheit.

Wie insbesondere die Fig. 7b zeigt, wird die stationäre Einheit gebildet durch zwei sich gegenüberliegende Statorringteilsegmente 102, 103. Die Statorringteilsegmente 102, 103 sind in dem Sensorgehäuseelement 106 gehalten. Zwischen den beiden Statorringsegmenten 102, 103 befindet sich eine Abstandsausnehmung 116, an dessen Ende, wie die Fig. 7a zeigt, ein Hall-IC-Schaltkreis (ASIC) 104 angeordnet ist.

Das Zahnradsegment 111 arbeitet mit seiner Teilverzahnung 117 mit dem Stellritzel 114 zusammen. Das Zahnradsegment 111 ist mit einer Feder verbunden, die im Sensorgehäuseelement 106 gehalten wird. Hierdurch wird gewährleistet, daß das Zahnradsegment 111 immer in eine definierte Endstellung gedreht wird. Mit dem Verdrehen des Zahnradsegments 111 in die vorgesehene Endstellung wird gesichert, daß die Drehwinkelsensoreinrichtung ebenfalls eine definierte Endstellung einnimmt.

In das Zahnradsegment 111 sind ein Ringmagnetteilsegment 105 und dahinter ein Statorringteilsegment 103' lagegerecht und genau eingeformt. Das Ringmagnetteilsegment 105 und das Statorringteilsegment 103' sind einteilig aus einem ferrittischen Material geformt. Durch ein spezielles Aufmagnetisierungsverfahren wird dann der Abschnitt ausgebildet, der das Ringmagnetteilsegment 105 umfaßt. Das Ringmagnetteilsegment 105 ist gegenläufig aufmagnetisiert. Hierdurch wird erreicht, daß die Gesamtbauhöhe der Drehwinkelsensoreinrichtung auf etwa die Hälfte reduziert wird. Das Zahnradsegment 111 selbst ist aus Kunststoff hergestellt, so daß beide Segmente 103', 105 lagegerecht und genau geformt werden können.

Die beiden Statorringsegmente 102, 103 und das Statorringteilsegment 103' und das Ringmagnetteilsegment 105 sind teilkreisförmig ausgebildet. Der Teilkreis hat einen Winkel, der zwischen 80 und 180° liegen kann. Im Ergebnis langwieriger Versuche wurde festgestellt, daß ¼-Teilkreis von 115° die genauesten Meßwerte ergibt. Hierdurch entstehen, wie die Fig. 7a zeigt, zwei sich gegenüberliegende sichelförmige Konfigurationen.

Beim Verdrehen des Zahnradsegments 111 fährt die sichelförmige Konfiguration, gebildet durch die beiden Statorringsegmente 102, 103 mit der Spitze ihrer Sichel beginnend an der sichelförmigen Konfiguration, gebildet durch das Ringmagnetteilsegment 105 und das dritte Statorringteilsegment 103', unter Belassung eines Luftspaltes 115 aneinander vorbei. Die Nullstellung des Zahnradsegments 111 ist in Fig. 7a gezeigt. Hierbei überlappen die Spitzen der beiden Sicheln 102, 103 und 103', 105 nur geringfügig übereinander. Beim Drehen des Zahnradsegments bis zur Endstellung drehen sich die beiden Statorteilringsegmente 102, 103 so weit, daß sie dem Ringmagnetteilsegment 105 und dem dahinter liegenden Statorringteilsegment 103' wenigstens teilweise vollständig gegenüberstehen. Der Hall-IC-Schaltkreis (ASIC) 104 ist an der Stelle des Endausschlages, wie die Fig. 7a deutlich macht, positioniert. Das Verdrehen der beiden sichelförmigen Einheiten gegeneinander von der Null- bis zur Endstellung erzeugt so einen veränderlichen Hall-Spannungswert, der der jeweiligen Winkelstellung entspricht.

Bei einem in Fig. 8a, 8b dargestellten Drosselklappendrehwinkelsensor 400 ist das Getriebe 101 und auch das Zahnradsegment 111 des Getriebes so ausgeführt, wie in den Fig. 7a. Auch ist das Zahnradsegment durch eine Feder mit dem Sensorgehäuseelement verbunden, wodurch auch hier eine definierte Endstellung gewährleistet wird.

Deutlich wird der Unterschied der Drehwinkelsensoreinrichtung beim Drosselklappendrehwinkelsensor 400 gegenüber der Drehwinkelsensoreinrichtung beim Sensor 300 durch die Fig. 8b.

Hier wird deutlich, daß die einzelnen Segmente 102, 103, 103', 104 und 105 übereinander liegend angeordnet sind.

Das Statorringteilsegment 102 und das Statorringteilsegment 103 sind in dem Sensorgehäuseelement 106 wenigstens teilweise eingeformt gehalten. Sie lassen zwischen die Statorabstandsausnehmung 116 frei, in dem der Hall-IC-Schaltkreis (ASIC) 104 angeordnet ist. Wie auch beim Sensor 300 können in der Statorabstandsausnehmung 116 nicht nur einer, sondern auch zwei Hall-IC-Schaltkreise 104 angeordnet sein. Hierdurch ist ein Messen zweier um einen Winkel versetzt verlaufender Spannungsverläufe möglich. Der zweite Schaltkreis 104 kann aber auch aus Redundanzgründen eingebaut werden, so daß die Zuverlässigkeit und damit die Meßsicherheit deutlich erhöht wird.

Ist das Sensorgehäuseelement 106 mit einem separaten Deckel versehen, können die beiden Statorringsegmente 102, 103 in diesen Deckel eingeformt werden.

In das Zahnrandsegment 111 sind an dessen Vorderseite das Statorringteilsegment 103' und darüber das Ringmagnetteilsegment 105 in dessen Kunststoff angeformt gehalten. Zwischen dem Statorringteilsegment 105 und den beiden Statorringsegmenten 102, 103 befindet sich ein Luftspalt 115. Auch hier sind die Statorringteilsegmente 102, 103, 103' aus einem ferrittischen Material, das hier durch das Codezeichen für Eisen FE besonders gekennzeichnet ist. Das Statorringteilsegment 103' und das Ringmagnetteilsegment 105 sind auch hier wie bei der Drehwinkelsensoreinrichtung des Sensors 300 einteilig geformt. Das Ringmagnetteilsegment 105 wird anschließend gegenläufig aufmagnetisiert, wodurch auch hier der positive Effekt entsteht, daß sich die Gesamthöhe um etwa die Hälfte reduziert.

Fig. 8a zeigt, daß auch hier zwei sichelförmige Konfigurationen entstehen, die einen Viertelteilkreis überstreichen und eine Länge aufweisen, die zwischen 80 und 180° liegen kann, vorteilhafterweise aber hier bei 115° liegt.

Beim Verdrehen dieser beiden sichelförmigen Konfigurationen dreht sich die Spitze der Sichel, gebildet durch das Ringmagnetsegment 105 und das Statorringteilsegment 103' unter der Sichel, gebildet durch die beiden Statorringsegmente 102, 103.

Bei einer Drehung des Zahnradsegments von einer Null- bis zu einer Endstellung stehen sich die beiden Sicheln 103', 105 bzw. 102, 103 wenigstens teilweise gegenüber, d. h. ihre Spitzen überlappen sich etwas, so daß ein Anfangswert zu messen ist. Beim Verdrehen des Zahnradsegments 111 bis zu dessen Endstellung liegt die untere Sichel, gebildet durch das Statorringteilsegment 103' und das Ringmagnetteilsegment 105 vollständig untereinander, d. h. wenigstens sich teilweise gegenüber.

Der Motor 109 kann entweder von dem Sensorgehäuseelement 106 entweder mit umschlossen werden oder extra an dieses angeflanscht werden.

Das Sensorgehäuseelement 106 kann auf folgende Art und Weise geformt werden:

Das Sensorgehäuseelement kann ein vollständig ausgebildetes Gehäuse sein, das separat mit einem Deckel verschlossen wird. Dieses Gehäuse kann, wie die Fig. 7a und 8a zeigen, direkt mit dem Drosselklappengehäuse 107 verbunden werden.

Dieses so ausgebildete Sensorgehäuseelement 106 kann aber auch durch ein Aufsetzen mit Hilfe von Verbindungsmitteln mit dem Drosselklappengehäuse 107 verbunden werden. Bei diesem Aufsetzen wird das Zahnradsegment 111 auf die Drosselklappenwelle 110 aufgesteckt.

In einer weiteren Ausführungsform kann das Sensorgehäuseelement wie ein Deckel ausgebildet sein, mit dessen Hilfe das Drosselklappengehäuse 107 verschlossen wird. Auch in dieser Ausführungsform wird das Zahnradsegment auf die Drosselklappenwelle 110 aufgesteckt.

Die beiden letztgenannten Varianten haben den Vorteil, daß die Drehwinkelsensoreinrichtungen mit und ohne Zusatzteile, wie Getriebe, Motoreinheit und dergleichen an einer anderen Stelle montiert werden können, wie die Drosselklappeneinheit mit dem Drosselklappengehäuse 107 und der darin befindlichen Drosselklappe 108, die durch die Drosselklappenwelle 110 in dem Gehäuse 107 drehbar gehalten wird.

Ein weiterer sehr wesentlicher Vorteil ist darüber hinaus, daß durch die spezielle Ausgestaltung der Drehwinkelsensoreinrichtung sich dessen Gesamthöhe um fast die Hälfte reduziert. Hierdurch wird der im Motorraum zur Verfügung stehende Raum maximal ausgenutzt. Das Einformen der wesentlichen Teile der Drehwinkelsensorvorrichtung in das aus Kunststoff geformte Sensorgehäuseelement 106 bzw. in das Zahnradsegment 111 reduziert den Montageaufwand und die Montagezeit gegenüber herkömmlichen Einrichtungen.

## Patentansprüche

1. Stellvorrichtung für eine Drosselklappeneinheit, bei der in einer Gehäuseeinheit (6, 7) eine von einer Drosselklappenwelle (10) gehaltene Drosselklappe (8) verstellbar angeordnet ist,
die wenigstens aufweist
- eine Hall-Effekt-Drehwinkelsensoreinrichtung, die an der Drosselklappenwellen (10) angeordnet ist, bestehend aus
• einer stationären Einheit (2, 3, 4) und
• einer beweglichen Einheit (5), die gegenüber der stationären Einheit (2, 3) zu bewegen ist,
- eine Antriebseinheit(9) und
- ein Getriebe (1), das zwischen der beweglichen Einheit und der Antriebseinheit (9) angeordnet ist,
- wobei die Gehäuseeinheit (6, 7) wenigstens die stationäre und die bewegliche Einheit (2, 3, 5) wenigstens teilweise umgibt,
dadurch gekennzeichnet,
- daß die stationäre Einheit aus wenigstens zwei beabstandet zueinander angeordneten Statorringsegmenten (2, 3) besteht, die zwischen sich einen Luftspalt (15) und wenigstens eine Statorabstandsausnehmung (16) frei lassen, in denen wenigstens teilweise wenigstens ein Hall-IC-Schaltkreis (4) angeordnet ist, und in der Gehäuseeinheit (6, 7) wenigstens teilweise gehalten sind, und
- daß die bewegliche Einheit aus einem teilringförmig ausgebildeten Ringmagnetteilsegment (5) besteht, das in einem Zahnrandsegment (11) des Getriebes (1) angeordnet und in dem Luftspalt (15) wenigstens teilweise zu bewegen ist.

2. Stellvorrichtung für eine Drosselklappeneinheit, bei der in einer Gehäuseeinheit (106, 107) eine von einer Drosselklappenwelle (110) gehaltene Drosselklappe (108) verstellbar angeordnet ist,
die wenigstens aufweist
- eine Hall-Effekt-Drehwinkelsensoreinrichtung, die an der Drosselklappenwellen (110) angeordnet ist, bestehend aus
• einer stationären Einheit (102, 103, 104) und
• einer beweglichen Einheit (103', 105), die gegenüber der stationären Einheit (102, 103) zu bewegen ist,
- eine Antriebseinheit(109) und
- ein Getriebe (101), das zwischen der beweglichen Einheit (103', 105) und der Antriebseinheit (109) angeordnet ist,
- wobei die Gehäuseeinheit (106, 107) wenigstens die stationäre und die bewegliche Einheit (102, 103, 103', 104, 105) wenigstens teilweise umgibt,
dadurch gekennzeichnet,
- daß die stationäre Einheit aus einem ersten und einem zweiten Statorringteilsegment (102, 103) besteht, die unter Belassung einer Statorabstandsausnehmung (116), in der wenigstens ein Hall-IC-Schaltkreis (104) angeordnet ist, und in der Gehäuseeinheit (106, 107) wenigstens teilweise gehalten sind, und
- daß die bewegliche Einheit aus einem Ringmagnetteilsegment (105) besteht,
• das gegenüber dem ersten und dem zweiten Statorringteilsegment (102, 103) wenigstens teilweise durch einen Luftspalt (105) beabstandet und
• das gemeinsam mit einem gegenüber dem Luftspalt (115) hinter ihm angeordneten dritten Statorringteilsegment (103') in einem Zahnradsegment (111) des Getriebes wenigstens teilweise gehalten ist.

3. Hall-Effekt-Drehwinkelsensoreinrichtung, bestehend aus
- einer stationären Einheit (2, 3, 4) und
- einer beweglichen Einheit (5), die gegenüber der stationären Einheit (2, 3, 4) zu bewegen ist,
- wobei die stationäre und die bewegliche Einheit (2, 3, 4, 5) wenigstens teilweise von einer Gehäuseeinheit (6, 7) umgeben ist,
dadurch gekennzeichnet,
- daß die stationäre Einheit aus wenigstens zwei beabstandet untereinander angeordneten Statorringsegmenten (2, 3) besteht, die zwischen sich einen Luftspalt (15) und wenigstens eine Statorabstandsausnehmung (16) frei lassen, in denen wenigstens ein Hall-IC-Schaltkreis (4) angeordnet ist, und in der Gehäuseeinheit (6, 7) wenigstens teilweise gehalten sind, und
- daß die bewegliche Einheit aus einem teilringförmig ausgebildeten Ringmagnetteilsegment (5) besteht, der in einen drehbar beweglichen Element (11) wenigstens teilweise gehalten ist.

4. Hall-Effekt-Drehwinkelsensoreinrichtung, bestehend aus
- einer stationären Einheit (102, 103, 104) und
- einer beweglichen Einheit (103', 105), die gegenüber der stationären Einheit (102, 103, 104) zu bewegen ist,
- wobei die stationäre und die bewegliche Einheit (102, 103, 103', 104, 105) wenigstens teilweise von einer Gehäuseeinheit (106, 107) umgeben ist,
dadurch gekennzeichnet,
- daß die stationäre Einheit aus einem ersten und einem zweiten Statorringteilsegment (102, 103) besteht, die unter Belassung einer Statorabstandsausnehmung (116), in der wenigstens ein Hall-IC-Schaltkreis (104) angeordnet ist, und in der Gehäuseeinheit (106, 107) wenigstens teilweise gehalten sind, und
- daß die bewegliche Einheit aus einem Ringmagnetteilsegment (105) besteht,
• das gegenüber dem ersten und dem zweiten Statorringteilsegment (102, 103) wenigstens teilweise durch einen Luftspalt (105) beabstandet und
• das gemeinsam mit einem gegenüber dem Luftspalt (115) hinter ihn angeordneten dritten Statorringteilsegment (103') in einem drehbeweglichen Element (111) wenigstens teilweise gehalten ist.

5. Einrichtung nach Anspruch 3 oder 4, dadurch gekennzeichnet, daß das drehbewegliche Element ein Zahnradsegment (11; 111) eines Getriebes (1; 101) ist, das an einer Drosselklappenwelle (10; 110) einer Drosselklappe (8; 108) angeordnet ist.

6. Vorrichtung nach Anspruch 1 oder Einrichtung nach Anspruch 3 oder 5, dadurch gekennzeichnet, daß die zwei Statorringsegmente (2, 3) und der teilringförmig ausgebildete Ringmagnet (5) in einer Ebene liegend wenigstens teilweise nebeneinander angeordnet sind.

7. Vorrichtung nach Anspruch 1 oder Einrichtung nach Anspruch 3 oder 5, dadurch gekennzeichnet, daß die zwei Statorringsegmente (2, 3) und der teilringförmig ausgebildete Ringmagnet (5) übereinander liegend angeordnet sind.

8. Vorrichtung nach Anspruch 1 oder 6 oder Einrichtung nach Anspruch 3 oder 5 und 6, dadurch gekennzeichnet, daß bei nebeneinander angeordneten Statorringsegmenten (2, 3) und ringförmigen Magnetelement (5) die zwischen den beiden Statorringsegmenten (2, 3) befindliche Statorabstandsausnehmung (16), in der wenigstens ein Hall-IC-Schaltkreis (10) angeordnet ist, zugleich Luftspalt (15) ist.

9. Vorrichtung nach Anspruch 1 oder 7 oder Einrichtung nach Anspruch 3 oder 5 und 7, dadurch gekennzeichnet, daß bei übereinanderliegend angeordneten Statorringsegmenten (2, 3) und dem teilringförmigen Ringmagneten (5) beide Statorringelemente (2, 3) den Luftspalt (15) zwischen sich frei lassen, indem der teilringförmige Ringmagnet zu bewegen ist und eines der beiden Statorringsegmente (2, 3) in zwei Teilstatorringsegmente (2.1, 2.2) geteilt ist, die zwischen sich die Statorabstandsausnehmung frei lassen, in der der Hall-IC-Schaltkreis (10) angeordnet ist.

10. Vorrichtung nach Anspruch 2 oder Einrichtung nach Anspruch 4 oder 5, dadurch gekennzeichnet, daß das erste und das zweite Statorringteilsegmenten (102, 103) und das Ringmagnetteil-Segment (105) und das dritte Statorringteilsegmenten (103') in einer Ebene liegend wenigstens teilweise nebeneinander angeordnet sind.

11. Vorrichtung nach Anspruch 2 oder Einrichtung nach Anspruch 4 oder 5, dadurch gekennzeichnet, daß das erste und das zweite Statorringteilsegment (102, 103) und das Ringmagnetteilsegment (105) und das dritte Statorringteilsegment (103') übereinander liegend angeordnet sind.

12. Vorrichtung nach Anspruch 2 oder 10 oder 11 oder Einrichtung nach Anspruch 4 oder 10 oder 11, dadurch gekennzeichnet, daß bei einer Drehung des Zahnradsegments (111) von einer Null- bis zu einer Endstellung das Ringmagnetteilsegment (105) und das dritte Statorringteilsegment (103') gegenüber dem ersten und dem zweiten Statorringteilsegment (102, 103) in der Nullstellung sich wenigstens teilweise und in der Endstellung sich wenigstens vollständig gegenüberstehen.

13. Vorrichtung oder Einrichtung nach einem der Ansprüche 1 bis 12, dadurch gekennzeichnet, daß die zwei Statorringsegmente (2, 3) das erste und das zweite Statorringteilsegment (102, 103) sowie das Ringmagnetteilsegment (5; 105) und das dritte Statorringteilsegment (103') einen Teilkreis zwischen 80 und 180° lang sind.

14. Vorrichtung oder Einrichtung nach einem der Ansprüche 1 bis 13, dadurch gekennzeichnet, daß das Ringmagnetteilsegment (5; 105) als ein gegenläufig eingestellter Magnet ausgebildet ist.

15. Vorrichtung oder Einrichtung nach einem der Ansprüche 1 bis 14, dadurch gekennzeichnet, daß das die Drehwinkelsensoreinrichtung mit ihrem Statorringsegmenten (2, 3) bzw. Statorringteilsegmenten ( 102, 103, 103'), ihren Ringmagnetteilsegmenten (5; 105) und ihrem Hall-IC-Schaltkreis (4; 104) und/oder das Getriebe (1; 101) wenigstens teilweise von einem Sensorgehäuseelement (6; 106) der Gehäuseeinheit wenigstens teilweise umschlossen sind.

16. Vorrichtung oder Einrichtung nach einem der Ansprüche 1 bis 15, dadurch gekennzeichnet, daß das Sensorgehäuseelement (6; 106) aus Kunststoff besteht, in das die Statorringsegmente (2, 3) bzw. Statorringteilsegmente (102, 103) wenigstens teilweise eingeformt sind.

17. Vorrichtung oder Einrichtung nach einem der Ansprüche 1 bis 16, dadurch gekennzeichnet, daß das Gehäusedeckelelement (6; 106) auf das Drosselklappengehäuse (7; 107) aufzusetzen und das Zahnradsegment (11; 111) auf die Drosselklappenwellen (10; 110) aufzusetzen ist.

18. Vorrichtung oder Einrichtung nach einem der Ansprüche 1 bis 17, dadurch gekennzeichnet, daß das Zahnradsegment (11; 111) im Sensorgehäuseelement (6; 106) mit einem in diesem ebenfalls angeordneten Federelement verbunden ist.

19. Vorrichtung oder Einrichtung nach einem der Ansprüche 1 bis 18, dadurch gekennzeichnet, daß ein erstes Zahnradsegment (11) aus Kunststoff besteht, in dem ein erstes Ringmagnetteilsegment (5) wenigstens teilweise eingeformt ist.

20. Vorrichtung oder Einrichtung nach einem der Ansprüche 1 bis 19, dadurch gekennzeichnet, daß ein zweites Zahnradsegment (111) aus Kunststoff besteht, in das das dritte Statorringteilsegment (103') und ein zweites Ringmagnetteilsegment (105) wenigstens teilweise eingeformt sind.

21. Vorrichtung oder Einrichtung nach einem der Ansprüche 1 bis 20, dadurch gekennzeichnet, daß die Drosselklappe (8; 108) mit der Drosselklappenwelle (10; 110) in einem Drosselklappengehäuse (7; 107) der Gehäuseeinheit angeordnet ist.

22. Vorrichtung oder Einrichtung nach einem der Ansprüche 1 bis 21, dadurch gekennzeichnet, daß das Sensorgehäuseelement (106) auf das Drosselklappengehäuse (7; 107) aufzusetzen und das erste oder zweite Zahnradsegment (11; 111) auf die Drosselklappenwelle (10; 110) aufzustecken ist.

23. Vorrichtung oder Einrichtung nach Anspruch 22, dadurch gekennzeichnet, daß das Sensorgehäuseelement (106) als Deckelgehäuseelement ausgebildet ist.

24. Vorrichtung oder Einrichtung nach einem der Ansprüche 1 bis 23, dadurch gekennzeichnet, daß das Gehäusedeckelelement (6), das Getriebe (1), die Statorringelemente (2, 3), die Teilstatorringsegmente (2.1, 2.2), den Hall-IC-Schaltkreis (4) und den teilringförmigen Ringmagneten umgibt und mit einem ersten Drosselklappengehäuse (7) verbunden ist.

25. Vorrichtung oder Einrichtung nach einem der Ansprüche 1 bis 24, dadurch gekennzeichnet, daß das Sensorgehäuseelement (106) und ein zweites Drosselklappengehäuse (107) miteinander verbunden sind.

26. Vorrichtung oder Einrichtung nach einem der Ansprüche 1 bis 25, dadurch gekennzeichnet, daß die beiden Statorringsegmente (2, 3) und das erste, zweite und dritte Statorringteilsegment (102, 103, 103') aus einem ferrittischen Material bestehen.

27. Vorrichtung oder Einrichtung nach einem der Ansprüche 1 bis 25, dadurch gekennzeichnet, daß das dritte Statorringteilsegment (103') und das zweite Ringmagnetteilsegment (105) einteilig hergestellt sind und das zweite Ringmagnetteilsegment (105) anschließend durch Aufmagnetisieren hergestellt ist.

28. Vorrichtung oder Einrichtung nach einem der Ansprüche 1 bis 27, dadurch gekennzeichnet, daß zum Getriebe (1; 101) gehört
- das erste oder zweite Zahnradsegment (11; 111)
- ein Motorritzel (13; 113), das mit der Antriebseinheit (9; 109) verbunden ist,
- ein Zwischenritzel (12; 112) und
- ein Stellritzel (14; 114), das am Zwischenritzel (12; 112) angeordnet und im Sensorgehäuseelement (6; 106) drehbar gelagert ist,
wobei mit dem ersten oder zweiten Zahnradsegment (11; 111) an das Stellritzel (14; 114) und mit dem Motorritzel (13; 113) an das Zwischenritzel (12; 112) anzugreifen ist.

29. Vorrichtung oder Einrichtung nach einem der Ansprüche 1 bis 28, dadurch gekennzeichnet, daß die Antriebseinheit ein Motor (9; 109) ist, der vom Deckelgehäuseelement (6) oder Sensorgehäuseelement (106) wenigstens teilweise mit umgeben ist.
